# EUROPÄISCHE PATENTSCHRIFT

(11) **EP 3 176 878 B1**
(45) Veröffentlichungstag und Bekanntmachung des Hinweises auf die Patenterteilung: **20.03.2019**
(21) Anmeldenummer: 16194778.3
(22) Anmeldetag: 20.10.2016
(51) Int. Cl.: H01R 9/24, H02G 15/113, H02H 9/04

(54) **KABELANSCHLUSSKASTEN UND ÜBERSPANNUNGSSCHUTZMODUL FÜR EINEN KABELANSCHLUSSKASTEN**
CABLE CONNECTION BOX AND OVERVOLTAGE PROTECTION MODULE FOR A CABLE CONNECTION BOX
BOÎTE DE CONNEXION DE CÂBLES ET MODULE DE PROTECTION CONTRE LES SURTENSIONS POUR UNE BOÎTE DE CONNEXION DE CÂBLES

(30) Priorität: 23.11.2015 DE 202015106372 U
(43) Veröffentlichungstag der Anmeldung: 07.06.2017
(73) Patentinhaber: Stadtfeld Elektrotechnische Fabrik GmbH & Co. KG, 42499 Hückeswagen (DE)
(72) Erfinder: Müller, Hans-Jürgen, 42499 Hückeswagen (DE)
(74) Vertreter: von dem Borne, Andreas

(56) Entgegenhaltungen:
- EP-A1- 0 774 768
- DE-U1- 9 208 422
- US-A- 5 606 299

## Beschreibung

Die Erfindung betrifft einen Kabelanschlusskasten, insbesondere für den Einbau in Lichtmasten, mit zumindest einem Anschlussblock mit Eingangsklemmen und Abgangsklemmen und mit zumindest einem an die Abgangsklemmen des Anschlussblockes anschließbaren Überspannungsschutzmodul mit einer elektronischen Schutzeinrichtung. - Ein solcher Kabelanschlusskasten, der beispielsweise in Lichtmasten eingesetzt wird, dient insbesondere der elektrischen Verbindung der aus dem Stromverteilungsnetz in den Lichtmast verlegten Stromversorgungskabel mit Verbraucherkabeln, beispielsweise einer Leuchtenstelle des Lichtmastes. Der Kabelanschlusskasten weist in der Regel ein Gehäuse auf, das z. B. von einem Unterkasten und einem Deckel gebildet wird, wobei der Unterkasten mit dem Deckel verschließbar ist. In dem Gehäuse bzw. in dem Unterkasten ist der Anschlussblock angeordnet, der auch als Einbaublock oder Einsatzteil bezeichnet wird, wobei ein solcher Anschlussblock entweder lösbar in dem Kabelanschlusskasten angeordnet sein kann oder auch fest mit dem Unterkasten verbunden sein kann, z. B. einstückig mit dem Unterkasten ausgebildet ist. Die elektrische Verbindung zwischen den Stromversorgungskabeln einerseits und den Verbrauchkabeln andererseits erfolgt über den Anschlussblock, welcher die Eingangsklemmen und die Abgangsklemmen aufweist, die mittels Leiterschienen, vorzugsweise unter Zwischenschaltung von einer oder mehreren Sicherungen, verbunden sind. Dabei sind in der Regel Eingangsklemmen, Abgangsklemmen und Leiterschiene für einen Erdleiter, einen Nullleiter und eine oder mehrere Phasen vorgesehen. Das Überspannungsschutzmodul besteht in der Regel aus einem Gehäuse und einer in dem Gehäuse angeordneten Schutzeinrichtung, die als elektronische Platine ausgebildet sein kann. Damit lassen sich die Leuchtenstelle und z. B. deren Vorschaltgerät vor Überspannungen, z. B. bei einem Blitzeinschlag, schützen.

Kabelanschlusskästen mit Anschlussblöcken bzw. Einbaublöcken sind in unterschiedlichsten Ausführungsformen bekannt (vgl. z. B. DE 197 19 788 C2, DE 201 13 643 U1 und DE 20 2008 000 405 U1).

Aus der DE 20 2013 012 034 U1 kennt man einen Kabelanschlusskasten zum Anschluss einer mit einem Vorschaltgerät versehenen Leuchte an ein Erdkabel, wobei der Kabelanschlusskasten an einem Eingangsbereich seines Gehäuses Klemmen für die vier oder fünf Adern des Erdkabels und anschließend Stromschienen PEN, L1, L2 und L3 oder N, L1, L2, L3 und PE aufweist, wobei mit den Stromschienen L1, L2 und L3 Schmelzsicherungen verbunden sind und wobei an einem Abgangsbereich des Gehäuses Klemmen für Leuchtenkabel vorgesehen sind. Bei diesem Kabelanschlusskasten ist eine Überspannungsschutz-Stromschiene vorgesehen, die von der PEN-Schiene oder der PE-Schiene über bzw. unter die L1-, L2- und L3-Schiene verläuft, wobei die Überspannungsschutzstromschiene in direktem elektrischen Kontakt mit der PEN-Schiene oder der PE-Schiene steht und zwischen der Überspannungsschutzstromschiene und der L1-, L2- und L3-Schiene jeweils ein Überspannungsschutzelement angeordnet ist. Bei einem solchen Kabelanschlusskasten sind die Komponenten für den Überspannungsschutz folglich in den Bereich des Einbaublocks bzw. deren Leiterschienen integriert.

Bei dem aus der Praxis bekannten Kabelanschlusskästen der eingangs beschriebenen Art ist das Gehäuse in der Regel so groß dimensioniert, dass abgangsseitig hinter dem Einbaublock ein verhältnismäßig großer Bauraum für den Einsatz und insbesondere die Verkabelung des Überspannungsschutzmoduls zur Verfügung steht. Denn häufig werden handelsübliche Überspannungsschutzmodule verwendet, die mithilfe von Kabeln elektrisch mit den Abgangsklemmen des Anschlussblockes verbunden werden.

Die insoweit aus der Praxis bekannten Kabelanschlusskästen mit Überspannungsschutzmodulen haben sich zwar technisch grundsätzlich bewährt, sie sind jedoch hinsichtlich der Montage und Handhabung verbesserungsfähig. - Hier setzt die Erfindung ein.

Im Übrigen kennt man aus der DE 196 18 736 A1 einen Anschlussblock bzw. ein Steuergerät, über den ein Inverter und eine Zusatzvorrichtung miteinander verbunden werden, wobei es sich bei der Zusatzvorrichtung über eine Überspannungsschutzvorrichtung handeln kann. Auf die Ausgestaltung von Kabelanschlusskästen für den Einbau in Lichtmasten hatten derartige Überlegungen keinen Einfluss. Das Dokument "US 5 606 299 A" offenbart einen Kabelanschlusskasten, mit zumindest einem Anschlussblock mit Eingangsklemmen und Abgangsklemmen des Motors bzw. Verbraucher, und einem an die Abgangsklemmen des Anschlussblockes anschließbaren Überspannungsschutzmodul mit einer elektronischen Schutzeinrichtung (Varistor), wobei das Überspannungsschutzmodul mehrere Anschlussklemmen und mehrere über die Schutzeinrichtung mit den Anschlussklemmen verbundene elektrisch leitende Anschlussstifte aufweist, wobei die Anschlussstifte derart mit den Abgangsklemmen des Anschlussblocks fluchten, dass sie im Zuge des Ansteckens des Überspannungsschutzmoduls an den Anschlussblock in die Abgangsklemmen eingreifen.

Der Erfindung liegt die Aufgabe zugrunde, einen Kabelanschlusskasten, insbesondere für den Einbau in Lichtmasten, zu schaffen, der sich bei einfachem und kompaktem Aufbau durch eine besonders einfache und zugleich sichere Montage des Überspannungsschutzmoduls auszeichnet.

Diese Aufgabe wird durch einen Kabelanschlusskasten gemäß Anspruch 1 gelöst. Bei einem solchen Überspannungsschutzmodul sind bevorzugt die Anschlussklemmen an einer dem Anschlussblock abgewandten Abgangsseite und die Anschlussstifte an einer dem Anschlussblock zugewandten Eingangsseite des Überspannungsschutzmoduls angeordnet.

Die Erfindung geht dabei von der Erkenntnis aus, dass sich ein Überspannungsschutzmodul in einem Kabelanschlusskasten besonders einfach auch bei geringem Bauraum in einem Kabelanschlusskasten montieren und mit den Abgangsklemmen des Einbaublocks ohne aufwendige Verkabelung verbinden lässt, wenn das Überspannungsschutzmodul mit starren bzw. steifen Anschlussstiften versehen ist, die bevorzugt als Drahtstifte ausgebildet sind, so dass im Zuge des Ansteckens des Überspannungsschutzmoduls an den Anschlussblock unmittelbar auch eine elektrische Kontaktierung erfolgt, indem die steifen Drahtstifte unmittelbar in die Abgangsklemmen des Anschlussblocks eingreifen. Eine aufwendige manuelle Verkabelung des Überspannungsschutzmoduls mit dem Anschlussblock bzw. Einbaublock ist damit nicht mehr erforderlich. Auf flexible Kabel kann bei der Kontaktierung des Überspannungsschutzmoduls an dem Anschlussblock vollständig verzichtet werden. Das Überspannungsschutzmodul ist dazu hinsichtlich seiner Geometrie und der Positionierung der Anschlussstifte bzw. Drahtstifte an die Geometrie und die Position der Abgangsklemmen des Einbaublocks angepasst, so dass die Anschlussstifte mit den Abgangsklemmen des Einbaublocks fluchten. Ein solcher Überspannungsschutzmodul lässt sich besonders kompakt und damit platzsparend realisieren. Dabei erfolgt eine besonders platzsparende Montage unmittelbar an den Abgangsklemmen des Anschlussteils des Kabelanschlusskastens, da im montierten Zustand kein Bauraum zwischen Einbaublock und Überspannungsschutzmodul für Anschlusskabel oder dergleichen zur Verfügung stehen muss. Vielmehr lässt sich das Überspannungsschutzmodul mit den vorkragenden Anschlussstiften direkt an den Einbaublock anstecken, so dass eine gleichsam bündige, platzsparende Anordnung realisiert wird. Das Überspannungsschutzmodul lässt sich leicht montieren und im Falle eines Defektes auch leicht austauschen. Außerdem wird durch die einfache Montage unter Verzicht auf eine manuelle Verkabelung mit flexiblen Kabeln auch eine Fehlbedienung bzw. ein Fehlanschluss ausgeschlossen. Zum einen ist die Zuordnung der Anschlussstifte zu den Abgangsklemmen des Eingangsblocks fest vorgegeben, so dass fehlerhafte Zuordnungen ausgeschlossen sind. Zum anderen werden durch das Anstecken des Überspannungsschutzmoduls an den Anschlussblock auch die Abgangsklemmen am Anschlussblock "automatisch" belegt oder zumindest abgedeckt, so dass anschließend ein Fehlanschluss des Verbrauchers ausgeschlossen ist.

Der Anschluss der Verbraucherkabel an dem Überspannungsschutzmodul kann ebenfalls sehr einfach erfolgen, da das Überspannungsschutzmodul mit entsprechenden Anschlussklemmen versehen ist, die bevorzugt an der Abgangsseite und folglich an der den Anschlussstiften gegenüberliegenden Seite des Überspannungsschutzmoduls angeordnet sind. Aufgrund der kompakten Bauform und der platzsparenden Montage des Überspannungsschutzmoduls direkt an dem Anschlussblock bleibt dann ausreichend Platz für eine einfache Montage der Verbraucherkabel an den Anschlussklemmen des Überspannungsschutzmoduls. Das Überspannungsschutzmodul weist zumindest zwei entsprechende Anschlüsse und folglich bevorzugt zumindest zwei Anschlussklemmen und zumindest zwei den jeweiligen Anschlussklemmen zugeordnete Anschlussstifte auf, wobei es sich bevorzugt zumindest um einen Nullleiter und eine Phase handelt, so dass für einen funktionierenden Überspannungsschutz eine Ableitung von der Phase zu dem Nullleiter erfolgen kann. Bevorzugt ist vorgesehen, dass das Überspannungsschutzmodul zumindest drei, vorzugsweise zumindest vier Anschlussklemmen und zumindest drei, vorzugsweise zumindest vier Anschlussstifte aufweist, die den jeweiligen Anschlussklemmen zugeordnet sind, und zwar z. B. für den Erdleiter, den Nullleiter und zumindest einen, vorzugsweise zwei Phasenleiter.

Die Anschlussklemmen des Überspannungsschutzmoduls sind bevorzugt als Schraubklemmen ausgebildet. Damit lassen sich die Verbraucherkabel an dem Überspannungsschutzmodul in einfacher und zuverlässiger Weise befestigen. Alternativ liegt es jedoch auch im Rahmen der Erfindung, dass die Anschlussklemmen des Überspannungsschutzmoduls als Klemmverbindungen und/oder Federverbindungen ausgestaltet sind. Jedenfalls gelingt eine zuverlässige Verbindung, so dass das Überspannungsschutzmodul mit dem Anschlussblock gleichsam zu einer technischen Einheit zusammengefügt wird. Dennoch ist ein einfacher Austausch des Schutzmoduls möglich.

Bei der Ausgestaltung des Anschlussblockes kann auf vorhandene Bauformen und Konstruktionen zurückgegriffen werden. Die Erfindung lässt sich folglich bei herkömmlichen Kabelanschlusskästen mit üblichen Einbaublöcken realisieren. Das Überspannungsschutzmodul kann dann in Aufbau und Dimensionierung an den Einbaublock bzw. Anschlussblock angepasst werden. Insofern weist der Anschlussblock auch Abgangsklemmen in üblicher Bauform auf, die z. B. als Schraubklemmen ausgebildet sein können. Dabei ist es vorteilhaft, wenn die Anschlussstifte des Überspannungsschutzmoduls nach dem Anstecken des Überspannungsschutzmoduls an den Anschlussblock in den Abgangsklemmen des Anschlussblockes fixiert werden, z. B. durch Verschraubung in den vorhandenen Schraubklemmen des Anschlussblocks. Alternativ lässt sich ein solches Überspannungsschutzmodul jedoch auch mit einem Anschlussblock realisieren und verbinden, der mit Steckklemmen bzw. Federklemmen ausgerüstet ist, so dass in diesem Fall auf eine separate Fixierung nach dem Anstecken verzichtet werden kann.

Das Überspannungsschutzmodul weist bevorzugt ein Gehäuse auf, in welchem die (elektronische) Schutzeinrichtung angeordnet ist, wobei eine solche elektronische Schutzeinrichtung in der Regel als (handelsübliche) Überspannungsschutzplatine ausgebildet sein kann. Diese Schutzeinrichtung ist in dem Gehäuse isoliert angeordnet und das Gehäuse ist dann außenseitig mit den (abgangsseitigen) Anschlussklemmen einerseits und den (eingangsseitigen) Anschlussstiften andererseits ausgerüstet. Dabei ist es vorgesehen, dass die Anschlussstifte in vorgegebenen Positionen mit einer vorgegebenen Länge (oder auch unterschiedlichen Längen) aus dem Gehäuse vorkragen, wobei die Positionen der Anschlussstifte und deren Längen an die entsprechende Geometrie des Anschlussblockes angepasst sind.

Dabei ist es z. B. zweckmäßig, dass die Breite (quer zur Längsrichtung des Kabelanschlusskastens) des Überspannungsschutzmoduls bzw. die Breite des Gehäuses des Überspannungsschutzmoduls in etwa der Breite des Anschlussblockes entspricht, so dass sich das Überspannungsschutzmodul im montierten Zustand gleichsam bündig fluchtend an den Anschlussblock anschließt. Alternativ liegt es jedoch auch im Rahmen der Erfindung, dass das Überspannungsschutzmodul eine geringere Breite aufweist als der Anschlussblock. Die Dimensionierung kann dabei von der Größe der verwendeten elektronischen Schutzplatine abhängen.

Besonders vorteilhaft ist die Tatsache, dass sich das Überspannungsschutzmodul sehr kompakt bauen lässt, so dass es insbesondere entlang der Längsrichtung des Kabelanschlusskastens sehr gering dimensioniert werden kann. Unter Berücksichtigung der zur Verfügung stehenden Schutzplatinen lässt sich das Überspannungsschutzmodul so dimensionieren, dass es im montierten Zustand den Anschlussblock lediglich um ein sehr geringes Übermaß verlängert, welches bevorzugt weniger als 25 mm, besonders bevorzugt weniger als 20 mm (in Längsrichtung des Kabelanschlusskastens) beträgt.

Wie bereits erläutert lässt sich die Geometrie des Überspannungsschutzmoduls an die Geometrie des zur Verfügung stehenden Anschlussblockes bzw. Einbaublocks anpassen, und zwar insbesondere dann, wenn das Überspannungsschutzmodul für bestehende Anschlussblöcke zur Verfügung gestellt werden soll. So kennt man aus der Praxis z. B. einen Anschlussblock, bei dem eine oder mehrere Abgangsklemmen des Anschlussblockes gegenüber einer oder mehreren Abgangsklemmen um ein vorgegebenes Maß in Längsrichtung vorspringen. Bei einer solchen Ausführungsform ist es zweckmäßig, das Überspannungsschutzmodul so auszugestalten, dass die zu den vorspringenden Abgangsklemmen fluchtenden Anschlussstifte um ein entsprechendes Maß gegenüber den anderen Stiften zurückspringen. Dabei liegt es grundsätzlich im Rahmen der Erfindung, dass sämtliche Anschlussstifte um dasselbe Maß aus dem Gehäuse des Überspannungsschutzmoduls vorkragen. Auch diesbezüglich kann jedoch eine Anpassung an die geometrischen Gegebenheiten erfolgen, so dass es z. B. auch zweckmäßig sein kann, wenn ein oder mehrere Anschlussstifte eine andere Länge aufweisen als die übrigen Anschlussstifte, z. B. entsprechend kürzer ausgestaltet sind.

Die Schutzeinrichtung des Überspannungsschutzmoduls kann in grundsätzlich bekannter Weise als elektronische Schutzplatine ausgebildet sein, die eine oder mehrere Schutzkomponenten aufweist. Bei diesen Schutzkomponenten kann es sich z. B. um einen Varistor und/oder einen Gasableiter handeln. Dabei ist in der Regel zumindest eine Schutzkomponente zwischen einer Phase und einem Nullleiter vorgesehen. In bevorzugter Ausgestaltung weist die Schutzeinrichtung zwei (oder mehr) Schutzkomponenten auf, z. B. sowohl einen Varistor als auch einen Gasableiter. Dabei liegt es im Rahmen der Erfindung, dass die Schutzeinrichtung zweistufig bzw. mehrstufig ausgebildet ist, indem z. B. eine erste Schutzkomponente (z. B. der Varistor) zwischen einem Phasenleiter und einem Nullleiter und eine zweite Schutzeinrichtung, z. B. der Gasableiter, zwischen dem Nullleiter und dem Erdleiter angeordnet ist. Der Varistor zeichnet sich durch ein sehr schnelles Ansprechverhalten aus, die über den Varistor abzuleitenden Ströme sind jedoch begrenzt. Demgegenüber lassen sich über den Gasableiter sehr hohe Ströme ableiten. Bevorzugt kommt daher die Kombination dieser Komponenten und damit ein gleichsam zweistufiger Aufbau in Betracht. Technisch ist z. B. vorgesehen, dass mithilfe der Schutzkomponenten eine Begrenzung auf einen Schutzpegel von ca. 1,5 kV erfolgt.

Nach einem weiteren Vorschlag der Erfindung ist vorgesehen, dass die Schutzeinrichtung des Überspannungsschutzmoduls derart ausgebildet ist, dass der angeschlossene Verbraucher im Falle eines Defektes des Überspannungsschutzmoduls vom Stromkreis getrennt wird, und zwar dauerhaft. Diese Ausgestaltung hat den Vorteil, dass nach einem Defekt die Leuchte ausgeschaltet bleibt, so dass ein Defekt des Überspannungsschutzmoduls unmittelbar erkannt wird.

Das erfindungsgemäße Überspannungsschutzmodul lässt sich im Übrigen in verschiedenen Ausgestaltungen realisieren, z. B. für den Schutz einer Phase oder alternativ auch für den Schutz von zwei Phasen. Der Überspannungsschutz kann dabei zwei Phasen schützen, und zwar unabhängig davon, ob Lastphase oder Steuerphase.

Die erfindungswesentlichen Anschlussstifte, die bevorzugt aus dem Gehäuse des Überspannungsschutzmoduls vorkragen, sind hinreichend biegesteif und folglich starr ausgebildet. Es handelt sich bevorzugt um Drahtstifte mit einem Querschnitt von zumindest 1,5mm, bevorzugt zumindest 2 mm, z.B. einen Querschnitt von 2,5 mm.

Gegenstand der Erfindung ist auch ein Überspannungsschutzmodul der beschriebenen Art. Das erfindungsgemäße Überspannungsschutzmodul wird folglich auch selbstständig unter Schutz gestellt. Dabei liegt es im Rahmen der Erfindung, dass ein solches Überspannungsschutzmodul für herkömmliche Kabelanschlusskästen mit herkömmlichen Einbaublöcken zur Verfügung gestellt wird, die grundsätzlich einen sehr großen Bauraum für die Installation herkömmlicher Überspannungsschutzmodule zur Verfügung stellen, wobei erfindungsgemäß vor allem die Montage erheblich vereinfacht wird. Außerdem kann der so frei werdende bzw. frei bleibende Bauraum für die Montage weiterer Geräte genutzt werden. Sofern der Anschlussblock flexibel in dem Gehäuse/Unterkasten positionierbar ist, kann der gewonnene Platz wahlweise für die Vergrößerung des Anschlussraums der abgehenden Kabel oder der zugeführten Kabel genutzt werden. Alternativ liegt es jedoch auch im Rahmen der Erfindung, dass Überspannungsschutzmodul in entsprechend kleiner dimensionierten Kabelanschlusskästen zu verwenden, so dass durch das erfindungsgemäße Überspannungsschutzmodul Kabelanschlusskästen zum Einsatz kommen können, die gegenüber herkömmlichen Kabelanschlusskästen mit Überspannungsschutz eine geringere Länge aufweisen.

Im Folgenden wird die Erfindung anhand einer lediglich ein Ausführungsbeispiel darstellenden Zeichnung näher erläutert. Es zeigen
- Fig. 1: einen (geöffneten) Kabelanschlusskasten mit erfindungsgemäßen Überspannungsschutzmodul in einer perspektivischen Draufsicht,
- Fig. 2: einen Anschlussblock und ein erfindungsgemäßes Überspannungsschutzmodul für den Kabelanschlusskasten nach Fig. 1 ,
- Fig. 3: den Gegenstand nach Fig. 2 in einer Draufsicht,

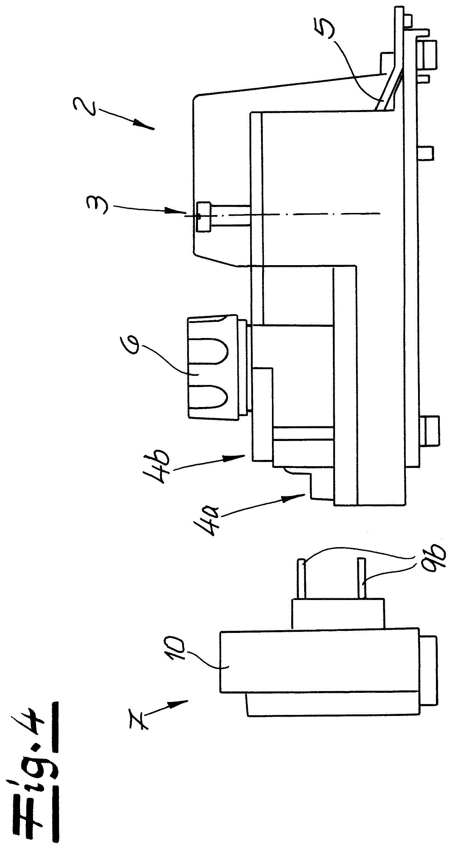

- Fig.4: den Gegenstand nach Fig. 2 in einer Seitenansicht.

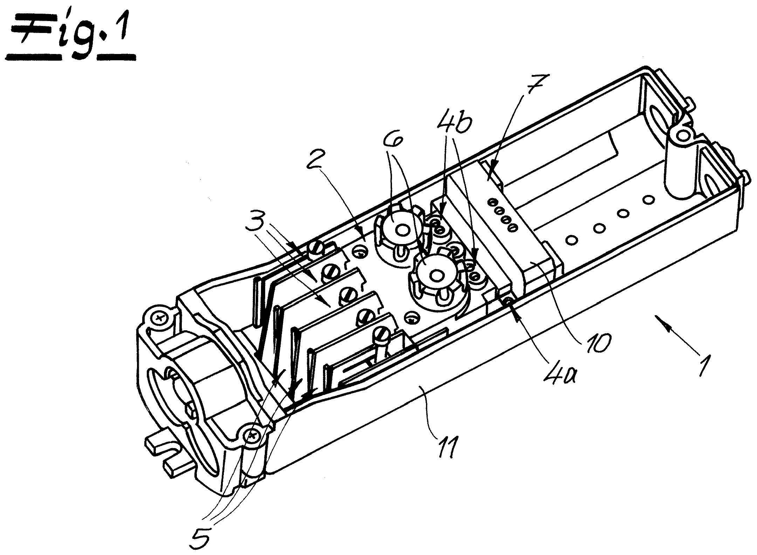

In Fig. 1 ist ein Kabelanschlusskasten 1 dargestellt, der insbesondere für den Einbau in Lichtmasten vorgesehen ist und dem Anschluss einer Leuchtenstelle an ein Stromversorgungsnetz bzw. Stromversorgungskabel dient. Ein solcher Kabelanschlusskasten 1 weist in der Regel ein Gehäuse auf, das aus einem Unterkasten 11 und einem Deckel zum Verschließen des Unterkastens dient. Fig. 1 zeigt dabei den Kabelanschlusskasten mit Unterkasten 11 ohne entsprechenden Deckel. In dem Kabelanschlusskasten 1 bzw. in dem Unterkasten 11 ist ein grundsätzlich bekannter Anschlussblock 2 angeordnet, der auch als Einbaublock bezeichnet wird. Dieser Anschlussblock 2 weist einerseits Eingangsklemmen 3 für den Anschluss von (nicht dargestellten) Eingangskabeln (z. B. Stromversorgungskabeln) und andererseits Abgangsklemmen 4a, 4b auf. An die Abgangsklemmen 4a, 4b lassen sich grundsätzlich Abgangskabel (z. B. für eine Leuchte eines Lichtmastes) anschließen. Im Rahmen der Erfindung erfolgt der Anschluss dieser nicht dargestellten Abgangskabel jedoch nicht unmittelbar an die Abgangsklemmen 4a, 4b, denn an diese Abgangsklemmen 4a, 4b ist ein Überspannungsschutzmodul 7 mit einer elektronischen Schutzeinrichtung angeschlossen, welches den Verbraucher vor Überspannungen z. B. bei Blitzschlag schützt.

Die Eingangsklemmen 3 des Anschlussblocks 2 sind mit den Abgangsklemmen 4a, 4b unter Zwischenschaltung von Leiterschienen 5 verbunden. Dabei sind jeweils eine Eingangsklemme, eine Leiterschiene und eine Abgangsklemme dem Erdleiter PE, dem Nullleiter N und den Phasen L1, L2 zugeordnet. Den Phasen L1, L2 sind dabei im Ausführungsbeispiel Sicherungen 6 zugeordnet, d. h. die Eingangsklemmen und die Abgangsklemmen sind unter Zwischenschaltung der Sicherungen 6 miteinander verbunden.

Das erfindungsgemäße Überspannungsschutzmodul 7 weist einerseits mehrere Anschlussklemmen 8 und andererseits mehrere elektrisch leitende Anschlussstifte 9a, 9b auf, wobei die Anschlussklemmen 8 an der dem Anschlussblock 2 abgewandten Abgangsseite des Überspannungsschutzmoduls und die Anschlussstifte 9a, 9b an der dem Anschlussblock zugewandten Eingangsseite des Überspannungsschutzmoduls 7 angeordnet sind. Das Überspannungsschutzmodul 7 weist zudem eine nicht dargestellte elektronische Schutzeinrichtung auf, die z. B. als elektronische Platine ausgebildet sein kann und in dem Gehäuse 10 des Überspannungsschutzmoduls 7 angeordnet ist.

Von besonderer Bedeutung sind im Rahmen der Erfindung die Anschlussstifte 9a, 9b des Überspannungsschutzmoduls 7, die in fest vorgegebenen Positionen als starre Drahtstifte angeordnet sind, und zwar derart, dass sie mit den Abgangsklemmen 4a, 4b des Anschlussblocks 2 fluchten, so dass sie im Zuge des Ansteckens des Überspannungsschutzmoduls 7 an den Anschlussblock 2 in die Abgangsklemmen 4a, 4b eingreifen.

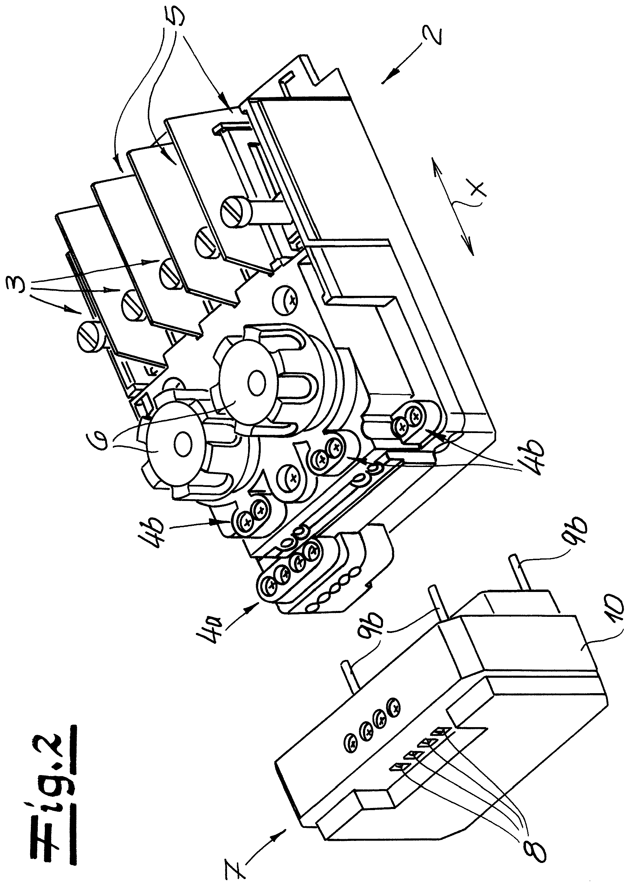

Dieses ergibt sich insbesondere aus einer vergleichenden Betrachtung der Fig. 1 und 2. Denn Fig. 2 zeigt das Überspannungsschutzmodul in einem noch nicht montierten Zustand, in dem es noch nicht an den Anschlussblock 2 angesteckt ist. Demgegenüber zeigt Fig. 1 das Überspannungsschutzmodul 7 im montierten Zustand innerhalb des Kabelanschlusskastens 1, d. h. das Überspannungsschutzmodul 7 wurde an den Anschlussblock 2 angesteckt und folglich mit ihm kontaktiert. Im Zuge des Ansteckens des Überspannungsschutzmoduls 7 an den Anschlussblock 2 greifen die Anschlussstifte 9a, 9b gleichsam automatisch in die Abgangsklemmen 4a, 4b des Anschlussblockes ein, so dass im Zuge des Ansteckens die elektrische Kontaktierung erfolgt. Dabei sind die Abgangsklemmen 4a, 4b des Anschlussblocks 2 als grundsätzlich bekannte Schraubklemmen ausgebildet, so dass die Anschlussstifte 9a, 9b nach dem Anstecken des Überspannungsschutzmoduls 7 an den Anschlussblock 2 in den Abgangsklemmen 4a, 4b fixiert werden, nämlich verschraubt werden.

Die Abgangskabel, die bei Verzicht auf ein Überspannungsschutzmodul an den Abgangsklemmen 4a, 4b befestigt werden, werden erfindungsgemäß an den Anschlussklemmen 8 des Überspannungsschutzmoduls befestigt, wobei diese Anschlussklemmen 8 in dem dargestellten Ausführungsbeispiel als Schraubklemme ausgebildet sind.

In dem Gehäuse 10 des Überspannungsschutzmoduls 7 ist eine grundsätzlich bekannte elektronische Schutzeinrichtung in der Ausführungsform als elektronische Schutzplatine angeordnet, die z. B. eine oder mehrere nicht dargestellte Schutzkomponenten aufweisen kann. Dabei kann es sich z. B. um einen Varistor einerseits und einen Gasableiter andererseits handeln, so dass eine zweistufige Schutzeinrichtung realisiert werden kann. Bei der Ausgestaltung der Schutzeinrichtung kann auf grundsätzliche bekannte Konzepte zurückgegriffen werden. Details sind nicht dargestellt.

Jedenfalls ist anhand der Figuren erkennbar, dass sich das erfindungsgemäße Überspannungsschutzmodul 7 sehr einfach montieren und mit dem Anschlussblock 2 kontaktieren lässt, und zwar bei gleichzeitig sehr kompakter Bauform. Die Breite B (quer zur Längsrichtung X des Kabelanschlusskastens) des Überspannungsschutzmoduls 7 bzw. die Breite des Gehäuses entspricht im Ausführungsbeispiel in etwa der Breite b des Anschlussblocks 2.

Die Länge des Überspannungsschutzmoduls 7 entlang der Längsrichtung X des Kabelanschlusskastens ist sehr gering. Das Überspannungsschutzmodul ist dabei so ausgestaltet, dass es im montierten Zustand den Anschlussblock 2 um ein lediglich sehr geringes Übermaß M verlängert. Dieses Übermaß M beträgt im Ausführungsbeispiel lediglich etwa 15 mm.

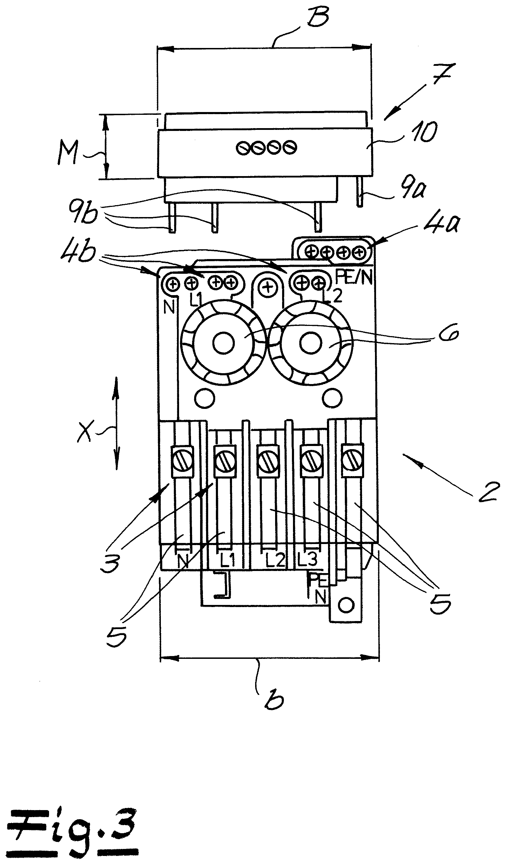

Eine vergleichende Betrachtung der Fig. 2 und 3 zeigt, dass der Anschlussblock 2 eine Abgangsklemme 4a für den Erdleiter aufweist, der gegenüber den anderen Abgangsklemmen 4b von Nullleiter und Phasenleitern um ein vorgegebenes Maß in Längsrichtung X vorspringt. An diese Geometrie ist das Überspannungsschutzmodul angepasst, denn der zu der vorspringenden Abgangsklemme 4a fluchtende Anschlussstift 9a springt um eine entsprechendes Maß gegenüber den anderen Stiften 9b, welcher mit den Abgangsklemmen 4b fluchten, zurück. Dabei ist im Übrigen in den Figuren angedeutet, dass die Anschlussstifte 9a, 9b alle dieselbe Länge aufweisen. Alternativ können die Stifte aber auch eine unterschiedliche Länge aufweisen. So kann z. B. der zurückspringende Anschlussstift 9a (etwas) kürzer als die Anschlussstifte 9b ausgebildet sein. Dieses ist nicht dargestellt.

Die Anschlussstifte 9a, 9b sind parallel zueinander und vorzugsweise parallel zur Längsrichtung X angeordnet.

## Patentansprüche

1. Kabelanschlusskasten (1) für den Einbau in Lichtmasten,
mit einem Gehäuse,
zumindest einem in dem Gehäuse angeordneten Anschlussblock (2) mit Eingangsklemmen (3) und Abgangsklemmen (4a, 4b) und
einem an die Abgangsklemmen (4a, 4b) des Anschlussblockes (2) anschließbaren Überspannungsschutzmodul (7) mit einer elektronischen Schutzeinrichtung, wobei das Überspannungsschutzmodul (7) mehrere Anschlussklemmen (8) und mehrere über die Schutzeinrichtung mit den Anschlussklemmen (8) verbundene elektrisch leitende Anschlussstifte (9a, 9b) aufweist,
wobei die Anschlussstifte (9a, 9b) derart mit den Abgangsklemmen (4) des Anschlussblocks (2) fluchten, dass sie im Zuge des Ansteckens des Überspannungsschutzmoduls (7) an den Anschlussblock (2) in die Abgangsklemmen (4) eingreifen.

2. Kabelanschlusskasten nach Anspruch 1, **dadurch gekennzeichnet, dass** die Anschlussklemmen (8) an einer dem Anschlussblock abgewandten Abgangsseite und die Anschlussstifte (9a, 9b) an einer dem Anschlussblock zugewandten Eingangsseite des Überspannungsschutzmoduls (7) angeordnet sind.

3. Kabelanschlusskasten nach Anspruch 1 oder 2, **dadurch gekennzeichnet, dass** das Überspannungsschutzmodul (7) zumindest zwei, z. B. zumindest drei, vorzugsweise zumindest vier Anschlussklemmen (8) und zumindest zwei, z. B. zumindest drei, vorzugsweise zumindest vier den Anschlussklemmen (8) zugeordnete Anschlussstifte (9) für einen Nullleiter (N) und zumindest einen, vorzugsweise zwei Phasenleiter (L1, L2) sowie ggf. einen Erdleiter (PE) aufweist.

4. Kabelanschlusskasten nach einem der Ansprüche 1 bis 3, **dadurch gekennzeichnet, dass** die Anschlussklemmen (8) des Überspannungsschutzmoduls (7) als Schraubklemmen ausgebildet sind.

5. Kabelanschlusskasten nach einem der Ansprüche 1 bis 4, wobei das Überspannungsschutzmodul (7) ein Gehäuse (10) aufweist, in dem die Schutzeinrichtung angeordnet ist, **dadurch gekennzeichnet, dass** die Anschlussstifte (9a, 9b) mit einer vorgegebenen Länge aus dem Gehäuse (10) vorkragen.

6. Kabelanschlusskasten nach einem der Ansprüche 1 bis 5, **dadurch gekennzeichnet, dass** die Anschlussstifte (9a, 9b) nach dem Anstecken des Überspannungsschutzmoduls (7) an den Anschlussblock (2) in den Abgangsklemmen (4a, 4b) fixierbar, z. B. verschraubbar sind.

7. Kabelanschlusskasten nach einem der Ansprüche 1 bis 6, **dadurch gekennzeichnet, dass** die Breite (B) des Überspannungsschutzmoduls (7) bzw. die Breite des Gehäuses (10) in etwa der Breite (b) des Anschlussblockes (2) entspricht oder geringer ist.

8. Kabelanschlusskasten nach einem der Ansprüche 1 bis 7, **dadurch gekennzeichnet, dass** sich das Überspannungsschutzmodul (7) im montierten Zustand um ein Übermaß (M) von weniger als 25 mm, vorzugsweise weniger als 20 mm in Längsrichtung (X) über den Anschlussblock (2) erstreckt.

9. Kabelanschlusskasten nach einem der Ansprüche 1 bis 8, wobei eine oder mehrere Abgangsklemmen (4a) des Anschlussblockes (2) gegenüber einer oder mehreren anderen Abgangsklemmen (4b) um ein vorgegebenes Maß in Längsrichtung (X) vorspringen, **dadurch gekennzeichnet, dass** die zu den vorspringenden Abgangsklemmen (4a) fluchtenden Anschlussstifte (9a) um ein entsprechendes Maß gegenüber den anderen Stiften (9b) zurückspringen.

10. Kabelanschlusskasten nach einem der Ansprüche 1 bis 9, **dadurch gekennzeichnet, dass** die Schutzeinrichtung als elektronische Schutzplatine ausgebildet ist, die eine oder mehrere Schutzkomponenten, vorzugsweise zumindest einen Varistor und/oder einen Gasableiter, aufweist.

11. Kabelanschlusskasten nach einem der Ansprüche 1 bis 10, **dadurch gekennzeichnet, dass** die Schutzeinrichtung zumindest eine erste Schutzkomponente, z. B. einen Varistor, zwischen einem Phasenleiter (L1, L2) und einem Nullleiter (N) und zumindest eine zweite Schutzeinrichtung, z. B. einen Gasableiter, zwischen einem Nullleiter (N) und einem Erdleiter (PE) aufweist.

12. Kabelanschlusskasten nach einem der Ansprüche 1 bis 11, **dadurch gekennzeichnet, dass** die Schutzeinrichtung derart ausgebildet ist, dass bei einem Defekt, z. B. durch eine Überspannung, eine Netztrennung erfolgt.

13. Überspannungsschutzmodul (7) für einen Kabelanschlusskasten (1) nach einem der Ansprüche 1 bis 12.

## Claims

1. Cable junction box (1) for installation in lamp posts, comprising a housing,
at least one terminal block (2) with input terminals (3) and output terminals (4a, 4b) arranged in the housing, and
an overvoltage protection module (7) with an electronic protection device connectable to the output terminals (4a, 4b) of the terminal block (2),
wherein the overvoltage protection module (7) has a plurality of connection terminals (8) and a plurality of electrically conductive connecting pins (9a, 9b) connected to the connection terminals (8) via the protection device,
wherein the connecting pins (9a, 9b) align with the output terminals (4) of the terminal block (2) in such a way that the engage into the output terminals (4) over the course of plugging in the overvoltage protection module (7) to the terminal block (2).

2. Cable junction box according to claim 1, **characterized in that** the connection terminals (8) are arranged on an output side of the overvoltage protection module (7) facing away from the terminal block and the connecting pins (9a, 9b) are arranged on an input side facing the terminal block.

3. Cable junction box according to claim 1 or 2, **characterized in that** the overvoltage protection module (7) has at least two, e.g., at least three, preferably at least four connection terminals (8) and at least two, e.g., at least three, preferably at least four connecting pins (9) assigned to the connection terminals (8) for a neutral conductor (N), and at least one, preferably two phase conductors (L1, L2) and optionally a ground conductor (PE).

4. Cable junction box according to any one of claims 1 to 3, **characterized in that** the connection terminals (8) of the overvoltage protection module (7) are designed as screw terminals.

5. Cable junction box according to any one of claims 1 to 4, wherein the overvoltage protection module (7) has a housing (10) in which the protection device is arranged, **characterized in that** the connection spins (9a, 9b) project out of the housing (10) with a predetermined length.

6. Cable junction box according to any one of claims 1 to 5, **characterized in that** the connecting pins (9a, 9b) can be fixed, e.g., can be screwed into the output terminals (4a, 4b) after plugging in the overvoltage protection module (7) to the terminal block (2).

7. Cable junction box according to any one of claims 1 to 6, **characterized in that** the width (B) of the overvoltage protection module (7) or the width of the housing (10) approximately corresponds to or is less than the width (b) of the terminal block (2).

8. Cable junction box according to any one of claims 1 to 7, **characterized in that** the overvoltage protection module (7) in the mounted state extends past the terminal block (2) by an excess measurement (M) of less than 25 mm, preferably less than 20 mm in the longitudinal direction (X).

9. Cable junction box according to any one of claims 1 to 8, wherein one or more output terminals (4a) of the terminal block (2) project by a predetermined measurement in the longitudinal direction (X) in comparison to one or more other output terminals (4b), **characterized in that** the connecting pins (9a) aligning with the projecting output terminals (4a) are set back by a corresponding measurement in comparison to the other pins (9b).

10. Cable junction box according to any one of claims 1 to 9, **characterized in that** the protection device is designed as an electronic printed circuit board, which has one or more protective components, preferably at least a varistor and/or a gas arrester.

11. Cable junction box according to any one of claims 1 to 10, **characterized in that** the protection device has at least one first protective component, e.g., a varistor, between a phase conductor (L1, L2) and a neutral conductor (N) and at least one second protective device, e.g., a gas arrester, between a neutral conductor (N) and a ground conductor (PE).

12. Cable junction box according to any one of claims 1 to 11, **characterized in that** the protection device is designed in such a way that in the case of a defect, e.g., due to an overvoltage, a disconnection from a network takes place.

13. Overvoltage protection (7) for a cable junction box (1) according to any one of claims 1 to 12.

## Revendications

1. Coffret de connexion de câbles (1) destiné à être intégré dans des mâts d'éclairage, comportant un boîtier,
au moins un bloc de connexion (2) placé dans un boîtier, pourvu de bornes d'entrée (3) et de bornes de sortie (4a, 4b) et
un module parasurtenseur (7) susceptible d'être connecté sur des bornes de sortie (4a, 4b) du bloc de connexion (2), pourvu d'un dispositif de protection électronique,
le module parasurtenseur (7) comportant plusieurs bornes de connexion (8) et plusieurs broches (9a, 9b) conductrices d'électricité, connectées aux bornes de connexion (8) par l'intermédiaire du dispositif de protection,
les broches (9a, 9b) étant alignées sur les bornes de sortie (4) du bloc d'alimentation (2), de sorte à s'engager dans les bornes de sortie (4), au cours du raccordement du module parasurtenseur (7) sur le bloc de connexion (2).

2. Coffret de connexion de câbles selon la revendication 1, **caractérisé en ce que** les bornes de connexion (8) sont placées sur un côté de sortie opposé au bloc de connexion et les broches (9a, 9b) sont placées sur un côté d'entrée du module parasurtenseur (7) qui fait face au bloc de connexion.

3. Coffret de connexion de câbles selon la revendication 1 ou 2, **caractérisé en ce que** le module parasurtenseur (7) comporte au moins deux, par exemple au moins trois, de préférence au moins quatre bornes de connexion (8) et au moins deux, par exemple au moins trois, de préférence au moins quatre broches (9) associées aux bornes de connexion (8) pour un conducteur neutre (N) et au moins un, de préférence deux conducteurs de phase (L1, L2) ainsi que, le cas échéant un conducteur de terre (PE).

4. Coffret de connexion de câbles selon l'une quelconque des revendications 1 à 3, **caractérisé en ce que** les bornes de connexion (8) du module parasurtenseur (7) sont conçues sous la forme de bornes à visser.

5. Coffret de connexion de câbles selon l'une quelconque des revendications 1 à 4, le module parasurtenseur (7) comportant un boîtier (10) dans lequel est placé le dispositif de protection, **caractérisé en ce que** les broches (9a, 9b) débordent du boîtier (10) d'une longueur prédéfinie.

6. Coffret de connexion de câbles selon l'une quelconque des revendications 1 à 5, **caractérisé en ce qu'**après le raccordement du module parasurtenseur (7), les broches (9a, 9b) sont susceptibles d'être fixées, par exemple d'être vissées sur le bloc de connexion (2) dans les bornes de sortie (4a, 4b).

7. Coffret de connexion de câbles selon l'une quelconque des revendications 1 à 6, **caractérisé en ce que** la largeur (B) du module parasurtenseur (7) ou la largeur du boîtier (10) correspond approximativement à la largeur (b) du bloc de connexion (2) ou est inférieure.

8. Coffret de connexion de câbles selon l'une quelconque des revendications 1 à 7, **caractérisé en ce qu'**en position montée, le module parasurtenseur (7) s'étend d'une dimension excédentaire (M) de moins de 25 mm, de préférence de moins de 20 mm dans la direction longitudinale (X) au-delà du bloc de connexion (2).

9. Coffret de connexion de câbles selon l'une quelconque des revendications 1 à 8, une ou plusieurs bornes de sortie (4a) du bloc de connexion (2) saillant par rapport à une ou à plusieurs autres bornes de sortie (4b) d'une dimension prédéfinie dans la direction longitudinale (X), **caractérisé en ce que** les broches (9a) alignées sur les bornes de sortie (4a) saillantes saillissent vers l'arrière d'une dimension correspondante par rapport aux autres broches (9b).

10. Coffret de connexion de câbles selon l'une quelconque des revendications 1 à 9, **caractérisé en ce que** le dispositif de protection est conçu sous la forme d'une carte électronique de protection qui comporte un ou plusieurs composants protecteurs, de préférence au moins variateur et/ou un éclateur à gaz.

11. Coffret de connexion de câbles selon l'une quelconque des revendications 1 à 10, **caractérisé en ce que** le dispositif de protection comporte au moins un premier composant protecteur, par exemple un variateur entre un conducteur de phase (L1, L2) et un conducteur neutre (N) et au moins un deuxième composant protecteur, par exemple un éclateur à gaz, entre un conducteur neutre (N) et un conducteur de terre (PE).

12. Coffret de connexion de câbles selon l'une quelconque des revendications 1 à 11, **caractérisé en ce que** le dispositif de protection est conçu de telle sorte que lors d'un défaut, dû par exemple à une surtension, il s'effectue une séparation du réseau.

13. Module parasurtenseur (7) destiné à un coffret de connexion de câbles (1) selon l'une quelconque des revendications 1 à 12.
